# EUROPEAN PATENT SPECIFICATION

(11) **EP 3 831 573 B1**
(45) Date of publication and mention of the grant of the patent: **04.01.2023**
(21) Application number: 19903872.0
(22) Date of filing: 10.12.2019
(51) Int. Cl.: B29C 48/37, B29C 48/375, B29C 48/92, B29C 48/305, B29C 48/08, B29C 48/385, C08J 9/28, B29C 67/20, B29C 55/12

(54) **SHEET MANUFACTURING METHOD**
VERFAHREN ZUR HERSTELLUNG VON FOLIEN
PROCÉDÉ DE FABRICATION DE FEUILLE

(30) Priority: 26.12.2018 JP 2018242910; 27.09.2019 JP 2019177537; 11.11.2019 JP 2019204002
(43) Date of publication of application: 09.06.2021
(73) Proprietor: Toray Industries, Inc., Tokyo, 103-8666 (JP)
(72) Inventor: YOSHIDA Takashi, Nasushiobara-shi, Tochigi 329-2763 (JP)
(74) Representative: Mewburn Ellis LLP
(86) International application number: PCT/JP2019/048359
(87) International publication number: WO 2020/137530

(56) References cited:
- EP-A1- 0 079 012
- EP-A1- 2 636 504
- JP-A- 2003 001 696
- JP-A- 2003 062 891
- JP-A- 2003 062 891
- JP-A- 2017 035 789
- JP-A- 2017 035 789
- JP-A- 2018 196 939
- JP-A- 2018 196 939

## Description

### TECHNICAL FIELD

The present invention relates to a method for producing a sheet and a method for producing a polyolefin microporous membrane. Also disclosed, but not forming part of the invention, is a kneading metering apparatus and a discharge apparatus that are used for production of the polyolefin microporous membrane.

### BACKGROUND ART

As described in Patent Literature 1, a polyolefin microporous membrane is continuously produced by: melt-kneading a polyolefin resin and a plasticizer by an extruder to prepare a polyolefin solution; transporting the polyolefin solution by a gear pump and continuously discharging the polyolefin solution from a spinneret or a die; cooling the discharged polyolefin solution to mold the discharged polyolefin solution into a continuous sheet shape; and stretching the molded sheet and removing the plasticizer from the molded sheet. Cooling of the polyolefin solution discharged from the spinneret is performed, for example, by bringing the polyolefin solution discharged into a sheet shape into contact with a cooling roller (chill roller) and allowing the polyolefin solution to dissipate heat. Depending on the application of the microporous polyolefin membrane, the thickness of the polyolefin microporous membrane is required to be highly uniform. In order to make the thickness uniform, fluctuations in the discharge amount from the spinneret are required to be reduced as low as possible.

As a technique of producing a polymer film with a uniform thickness, Patent Literature 2 discloses that two gear pumps are provided in series at an outlet of a twin-screw extruder, and the rotation speed of a gear pump on the upstream side of the two gear pumps is controlled in response to suction pressure of the gear pump, and a gear pump on the downstream side is controlled such that its rotation speed is constant, although Patent Literature does not relate to a microporous membrane. In Patent Literature 2, when a polypropylene film is produced, a value of (σ/average thickness) reaches 1.2% to 1.6% in which σ is a standard deviation of a thickness in an extruding direction. Patent Literature 3 discloses that when a polyethylene terephthalate (PET) film is produced, two gear pumps are provided in series at an outlet of an extruder, each of the extruder and a gear pump on the downstream side is operated at a constant rotation speed, and the rotation speed of a gear pump on the upstream side is controlled such that the pressure on the outlet of the extruder is constant, and as a result, a thickness unevenness of 2.6% is obtained. Patent Literature 3 further discloses that a second extruder is provided between a gear pump on the upstream side and a gear pump on the downstream side, and the second extruder is controlled such that the rotation speed is constant, and as a result, a thickness unevenness of 1.7% is obtained. Patent Literature 4 describes an extrusion molding apparatus capable of producing a sheet. Patent Literature 5 describes a method of forming foamed thermoplastic extrudates by injecting blowing agents into a thermoplastic melt. Patent Literature 6 describes a kneading/extruding apparatus which keeps the pressure of kneaded material before a first-stage gear pump constant in steady operation (molding). Patent Literature 7 describes a kneading metering apparatus for extrusion molding which allows for screen-backwashing.

### CITATION LIST

### PATENT LITERATURE

Patent Literature 1: WO 2016/125526 A1
Patent Literature 2: JP H07-290557 A
Patent Literature 3: JP 2017-35789 A
Patent Literature 4: JP 2018-196939 A
Patent Literature 5: EP 0 079 012 A1
Patent Literature 6: EP 2 636 504 A1
Patent Literature 7: JP 2003-062891 A

### SUMMARY OF INVENTION

### TECHNICAL PROBLEM

Even when the techniques of providing two gear pumps in series at the outlet of the extruder as shown in Patent Literature 2 or Patent Literature 3 are used, the following control is merely made: the rotation speed of the gear pump on the upstream side is controlled in response to the suction pressure and the gear pump on the downstream side is controlled to have a constant rotation speed. As a result, the volumetric efficiency of the gear pump on the downstream side during operation is too low and the discharge accuracy decreases, or both of the two gear pumps in series have high gear pump efficiency, a polymer flow to the gear pump is reduced, and pressure fluctuations between the gear pumps are increased. Therefore, even if a microporous membrane is produced, it is difficult to sufficiently reduce the variation in the thickness of the microporous membrane after membrane formation.

As a method for reducing the thickness unevenness, the second extruder, that is, an additional extruder is also considered to be provided between the two gear pumps as described in Patent Literature 3. However, when the second extruder is provided, the cost increases, and the residence time of the resin from kneading to discharge becomes longer. Therefore, the resin in the polyolefin solution may deteriorate due to heat.

An object of the present invention is to provide a production method by which a sheet and a polyolefin microporous membrane, each having a uniform thickness, can be obtained without using an additional extruder, by preventing fluctuations in discharge amount of a polyolefin solution discharged from a spinneret after melt-kneading. Also disclosed, but not forming part of the invention, is a kneading metering apparatus and a discharge apparatus that are available for implementation of the production method.

### SOLUTION TO PROBLEM

A method for producing a sheet in an embodiment of the present invention includes: transporting a fluidized resin by a plurality of gear pumps connected to each other in series; and molding the transported fluidized resin into a sheet shape by a spinneret, and among the plurality of gear pumps, a gear pump on the most downstream side is operated such that a volumetric efficiency thereof is 90.0% or more, a gear pump other than the gear pump on the most downstream side is operated such that a volumetric efficiency thereof is 50.0% or more and less than 90.0%, and the plurality of gear pumps is operated such that a differential pressure between the plurality of gear pumps is 7.0 MPa or less.

A method for producing a polyolefin microporous membrane in an embodiment of the present invention includes molding a sheet by the above method for producing a sheet, and then stretching the sheet and removing the plasticizer to produce a polyolefin microporous membrane.

Also disclosed, but not forming part of the invention, is a kneading metering apparatus that includes: a plurality of gear pumps configured to transport a fluidized resin, the gear pumps being connected to each other in series, and among the plurality of gear pumps, a gear pump on the most downstream side is set to have a volumetric efficiency of 90.0% or more, a gear pump other than the gear pump on the most downstream side is set to have a volumetric efficiency of 50.0% or more and less than 90.0%, and a differential pressure between the plurality of gear pumps is 7.0 MPa or less.

Also disclosed, but not forming part of the invention, is a discharge apparatus that includes: a kneading metering apparatus including an extruder configured to prepare a polyolefin solution obtained by melt-kneading a polyolefin resin and a plasticizer, the fluidized resin being the polyolefin solution; and a spinneret configured to discharge the polyolefin solution transported by the kneading metering apparatus.

### ADVANTAGEOUS EFFECTS OF INVENTION

In the present invention, when at least a plurality of gear pumps are provided in series at an outlet of an extruder and a fluidized resin prepared by performing melt-kneading by the extruder is metered and transported by these gear pumps, each of a gear pump on the most downstream side and the other gear pump(s) is operated at specific volumetric efficiency and the gear pumps are operated such that a differential pressure between the plurality of gear pumps is within a specific range. As a result, a flow rate of the fluidized resin is stabilized. Therefore, the discharge amount of the fluidized resin from a spinneret is also stabilized, and as a result, a sheet and a polyolefin microporous membrane, each having a uniform thickness, can be obtained.

### BRIEF DESCRIPTION OF DRAWINGS

[FIG. 1] FIG. 1 is a schematic diagram showing an example of a discharge apparatus used in a method for producing a sheet according to an embodiment of the present invention.
[FIG. 2] FIG. 2 is a flowchart showing steps for producing a polyolefin microporous membrane.

### DESCRIPTION OF EMBODIMENTS

Next, preferred embodiments of the present invention are described with reference to the drawings.

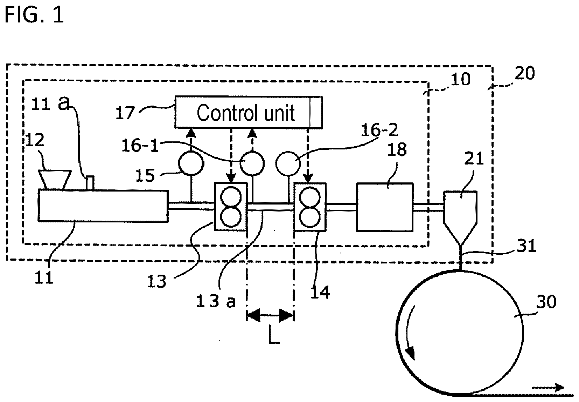

FIG. 1 shows an apparatus used in a method for producing a sheet according to an embodiment of the present invention, and particularly shows a configuration of an apparatus for performing a process from the preparation of a fluidized resin to the discharge.

A kneading metering apparatus 10 for preparing and transporting a fluidized resin is included in the apparatus shown in FIG. 1. The kneading metering apparatus 10 includes a plurality of gear pumps that transport a fluidized resin and are arranged in series with each other, and among the plurality of gear pumps, a gear pump on the most downstream side is set to have a volumetric efficiency of 90.0% or more, and gear pump(s) other than the gear pump on the most downstream side are set to have a volumetric efficiency of 50.0% or more and less than 90.0%. The volumetric efficiency of the gear pump refers to a value obtained by dividing the discharge amount per rotation of a fluidized resin actually discharged from the gear pump by the theoretical discharge amount per rotation based on the volume per rotation speed of the gear pump.

An extruder may be a twin-screw extruder or a single-screw extruder, or a twin-screw extruder and a single-screw extruder may be connected to each other in series. An extruder 11 shown in FIG. 1 is, for example, a twin-screw extruder, and includes a hopper 12 from which a raw material, for example, a resin is supplied, and a plasticizer inlet 11a from which a plasticizer is supplied. In this example, the plasticizer inlet 11a is provided on the downstream side in a flow direction of a fluidized resin relative to the hopper 12.

The volumetric efficiency of a gear pump generally increases as the differential pressure between an inlet and an outlet of the gear pump decreases. Namely, if the pressure at the outlet of the gear pump is higher than the pressure at the inlet, the fluidized resin is less likely to flow through the gear pump. In contrast, if the pressure at the outlet is almost the same as the pressure at the inlet, the fluidized resin is likely to flow. Therefore, the volumetric efficiency of the gear pump can be changed by operation conditions (e.g., the rotation speed) of the gear pump.

In the kneading metering apparatus 10, among the plurality of gear pumps, the gear pump on the most downstream side is operated such that the volumetric efficiency is 90.0% or more, and the gear pump(s) other than the gear pump on the most downstream side are operated such that the volumetric efficiency is 50.0% or more and less than 90.0%.

In the apparatus shown in FIG. 1, two gear pumps 13, 14 are connected in series to an outlet of the extruder 11. In the two gear pumps, the gear pump 13 is a gear pump on the upstream side, and the gear pump 14 is a gear pump on the most downstream side. These two gear pumps 13, 14 are connected to each other only by a serial pipe 13a, and in other words, other branch pipe(s) are not connected to the serial pipe 13a.

The kneading metering apparatus may further include a detection unit that detects a pressure of the fluidized resin at the inlet or outlet of at least one of the gear pumps other than the gear pump on the most downstream side, and a control unit that controls the rotation speed of the gear pump including the detection unit, based on the detection result obtained by the detection unit.

The detection unit may be a pressure sensor.

In order to reach the predetermined volumetric efficiency by setting operation conditions, particularly the rotation speed, of the gear pump 13 on the upstream side, the kneading metering apparatus 10 shown in FIG. 1 further includes a pressure sensor 15 that measures the pressure of the fluidized resin on the inlet side of the gear pump 13, a pressure sensor 16-1 that measures the pressure of the fluidized resin on the outlet side of the gear pump 13, and a control unit 17 that controls the rotation speed of the gear pump 13 based on at least one of the detected values of the pressure sensors 15, 16-1. In this apparatus, the control unit 17 controls the rotation speed of the gear pump 13 such that a detected value at the pressure sensor 15 on the inlet side of the gear pump 13 becomes constant, and the control unit 17 may control the rotation speed of the gear pump 13 such that a detected value at the pressure sensor 16-1 on the outlet side becomes constant. The gear pump 14 on the most downstream side is driven at a constant rotation speed after the adjustment is performed when the production of the polyolefin microporous membrane is started.

A strainer 18, which is a filter for filtering and removing foreign matter in the fluidized resin, is provided at an outlet of the gear pump 14 on the most downstream side. An outlet of the strainer 18 serves as an outlet of the kneading metering apparatus 10 for the fluidized resin and is connected to a spinneret (also referred to as a die) 21. The fluidized resin transported by the kneading metering apparatus 10 is molded into a sheet shape and is discharged from the spinneret 21.

A discharge apparatus includes the kneading metering apparatus and a spinneret from which a fluidized resin transported by the kneading metering apparatus is discharged.

As shown in FIG. 1, a discharge apparatus 20 that discharges a fluidized resin includes the kneading metering apparatus 10 and the spinneret 21. The fluidized resin 31 discharged from the spinneret 21 is cooled and solidified by, for example, coming into contact with a cooling roller (also referred to as chill roller) 30, and is sent to the next step.

In the embodiment of the present invention, the viscosity based on a melt index measurement method (MI) of a prepared fluidized resin is preferably 1 g/10 min or more and 150 g/10 min or less. MI (MI value) refers to one of methods representing the viscosity (fluidity) of a thermoplastic resin such as polyolefin during the melting, and refers to an index of fluidity represented by converting the discharge amount (between marked lines) of the sample which has been melted in a cylinder (heating cylinder) and is extruded from an orifice by adding a constant load to the sample, to a weight per 10 minutes (unit: g/10 min). That is, in the case of the same cylinder temperature and load condition, a material having a larger MI value indicates better fluidity.

The MI value in the embodiment of the present invention is an average value of measured MI values of the collected fluidized resins discharged from the spinneret 21 after having been melt-kneaded by the extruder 11.

In the present invention, the MI value (unit: g/10 min) is a value measured at the condition M (230°C, 2.16 kgf (21.18 N)) in accordance with JIS K 7210 (1999). When a polyolefin microporous membrane produced by a production method based on the present invention using a fluidized resin having such a MI value is used as a separator between electrodes of a lithium ion secondary battery, the occurrence of short circuits between the electrodes is prevented, and the safety of the battery is improved. When the MI value of the fluidized resin is 1 g/10 min or more, the thermal shrinkage ratio of a microporous membrane produced using the fluidized resin is kept low. That is, when the thermal shrinkage ratio is increased, the safety of a battery at a high temperature may be damaged. When the MI value of the fluidized resin is 150 g/10 min or less, the puncture strength of a polyolefin microporous membrane produced using the fluidized resin is sufficient, and the safety of a battery is good. In terms of the lower limit, the MI value of the fluidized resin is preferably 1.2 g/10 min or more, and more preferably 1.3 g/10 min or more. In terms of the upper limit, the MI value is preferably 100 g/10 min or less, and more preferably 80 g/10 min or less.

In the embodiment of the present invention, a plurality of gear pumps are required. When a fluidized resin should be stably extruded with good discharge accuracy, a gear pump preferably has a function of boosting, pressure control, and metering. When a gear pump has the function of boosting, an extruder provided on the upstream side is not required to have the function of boosting. Therefore, the degree of freedom of the process, such as the screw configuration in the extruder, is increased. When the gear pump has the function of pressure control, the rotation speed of the extruder can be set to be constant and the fluidized resin can be extruded. As a result, physical properties of the microporous membrane is likely to become uniform. In that case, when one gear pump has the functions of boosting and pressure control, discharge accuracy may deteriorate. On the other hand, when the discharge accuracy is improved, the functions of boosting and pressure control are hardly achieved. Therefore, a plurality of gear pumps are required, and two gear pumps are preferable. In that case, it is required to set a gear pump having the highest volumetric efficiency on the most downstream side. Namely, the gear pump having the highest volumetric efficiency maintains good metering accuracy, so that a fluidized resin is discharged with good discharge accuracy. Accordingly, a gear pump is not provided on a downstream side of the gear pump having the highest volumetric efficiency.

Next, in order to form a polyolefin microporous membrane having a sufficiently uniform thickness, fluctuation in the discharge amount of the fluidized resin discharged from the spinneret 21 is represented by, for example, 3σ/average discharge amount in which σ is a standard deviation of the discharge amount over a certain period of time, and is preferably 2% or less. The fluctuation in the discharge amount is more preferably 1.8% or less.

When the fluctuation in the discharge amount (spinneret discharge fluctuation 3σ value) is 2% or less, the thickness unevenness in a longitudinal direction of a machine is reduced, and when the fluidized resin is in contact with a cooling roller 30 and is cooled and solidified, there is almost no difference in the thickness in a longitudinal direction of the machine in a crystallized state of a resin caused by a difference in the cooling rate of the fluidized resin. Therefore, when a sheet is stretched to form a polyolefin microporous membrane, the variation of the strength and thermal shrinkage ratio of a film in the longitudinal direction are reduced, and when the polyolefin microporous membrane is used as a separator, battery performances can be exhibited. Further, when the sheet is stretched, the thickness unevenness in the longitudinal direction is small, so that the temperature rises evenly in the longitudinal direction. Accordingly, a stretched state can be kept constant in the longitudinal direction. Therefore, when the polyolefin microporous membrane is produced, the variation of the strength and the thermal shrinkage ratio in the longitudinal direction can be reduced, and battery performances as a separator can be exhibited.

In addition, for removing a plasticizer based on a solvent, when the thickness unevenness is small, the solvent can be removed uniformly in the longitudinal direction, a polyolefin microporous membrane having appearance of a film and small unevenness of the air permeability resistance can be formed, and battery performances can be exhibited when the polyolefin microporous membrane is used as a separator. In addition, for winding the polyolefin microporous membrane, when the thickness unevenness is small, a rate of an increase in diameter of a roll during winding can be kept constant, the polyolefin microporous membrane can be wound without wrinkles, and battery performances can be exhibited when the polyolefin microporous membrane unwound from a would roll is used as a separator.

For exhibiting battery performances, when the polyolefin microporous membrane is used as a separator, the unevenness of the air permeability resistance of the polyolefin microporous membrane is preferably within 10% relative to a design value. It is preferable because a microporous membrane that can exhibit good battery performances as a separator can be produced when the fluctuation in the discharge amount is 2% or less since it is expected that the influence of the fluctuation in the discharge amount relative to the unevenness of the air permeability resistance is 20% or less.

In the apparatus shown in FIG. 1, the volumetric efficiency of the gear pump 13 on the upstream side of the two gear pumps 13, 14 adjacent to each other is required to be 50.0% or more and less than 90.0%. The gear pump 13 applies pressure, which is as large as possible and has a constant size, to the fluidized resin to be discharged to the spinneret 21, and plays a role of rough metering (a role of discharging as uniform amount of fluidized resin as possible). When the volumetric efficiency of the gear pump 13 is 50.0% or more, a backflow, which is a flow of the fluidized resin (a polymer) from the outlet of the gear pump 13 to the inlet of the gear pump 13, is prevented from occurring excessively. The term "backflow" means that a flow of the polymer in a direction opposite to a flow of the polymer to be sent is generated in the gear pump. When the backflow is large, the metering accuracy of the gear pump 13 used as a metering pump is deteriorated, and the amount of liquid fed to the spinneret 21 may be reduced, which may hinder the actual operation.

When the volumetric efficiency of the gear pump 13 is less than 50.0%, the metering accuracy is deteriorated and the thickness unevenness in the polyolefin microporous membrane after the membrane formation is increased due to the backflow that is the flow of the polymer from the outlet of the gear pump 13 to the inlet of the gear pump 13. In this manner, when a polyolefin microporous membrane having large thickness unevenness is used as a separator between electrodes of a lithium ion secondary battery, the strength of the separator and the battery performances are less likely improved. On the other hand, when the volumetric efficiency of the gear pump 13 is set to be less than 90.0%, the discharge amount of the gear pump 13 is larger than the discharge amount of the gear pump 14 due to the discharge fluctuation in the gear pumps 13, 14, and pressure fluctuation in a system can be absorbed since a backflow occurs from the outlet side of the gear pump 13 to the inlet side of the gear pump 13 even if the pressure of the fluidized resin tends to increase in the serial pipe 13a between the gear pumps 13, 14. As a result, stable discharge with reduced pressure fluctuations in the serial pipe 13a becomes possible, and damages to the serial pipe 13a can be prevented. In other words, the present invention can achieve good metering accuracy and stable discharge by allowing a backflow to occur in the gear pump 13 on the upstream side of the two gear pumps 13, 14 adjacent to each other.

When a length L of the serial pipe 13a is set to be long, the longer the length L of the serial pipe 13a is, the longer the residence time of the fluidized resin inside the serial pipe 13a is. Therefore, the resin contained in the fluidized resin is likely to deteriorate due to heat. Therefore, in the embodiment of the present invention, when the two gear pumps 13, 14 are used to perform highly accurate metering, in order to prevent the thermal deterioration of the resin, the length L of the serial pipe 13a is shortened as much as possible, and the volumetric efficiency of the gear pump 13 on the upstream side is set as described above to allow the backflow that is a flow of a polymer from the outlet of the gear pump 13 to the inlet of the gear pump 13.

In terms of the lower limit, the volumetric efficiency of the gear pump 13 is preferably 55.0% or more, and more preferably 60.0% or more.

In the embodiment of the present invention, the volumetric efficiency of the gear pump 14 that is a gear pump on the most downstream side is required to be 90.0% or more. When the volumetric efficiency of the gear pump on the most downstream side is set to be 90.0% or more, the occurrence of a backflow in the gear pump 14 is prevented, and the good metering accuracy is maintained. Therefore, the thickness unevenness of the polyolefin microporous membrane after the membrane formation is reduced, and the strength of a separator and the battery performances are guaranteed when the polyolefin microporous membrane is used as a separator of a lithium ion secondary battery. In other words, when the volumetric efficiency of the gear pump 13 on the upstream side is set as described above, the pressure of a fluidized resin just before the gear pump 14 is increased as much as possible, and the pressure fluctuation just before the gear pump 14 can be prevented from occurring. Therefore, it is not necessary to greatly increase the pressure of the fluidized resin in the gear pump 14, so that the fluidized resin in a uniform amount can be discharged by keeping the rotation speed constant. Therefore, the volumetric efficiency of the gear pump 14 is set to be higher than the volumetric efficiency of the gear pump 13.

On the other hand, it is preferable that the volumetric efficiency of the gear pump 14 that is the gear pump on the most downstream side is set to be 99.0% or less. When the volumetric efficiency of the gear pump 14 that is the gear pump on the most downstream side is set to be 99.0% or less, the exhaustion of the fluidized resin inside the gear pump 14 is prevented, and the occurrence of problems such as burn-in of the gear pump 14 is prevented. In terms of the upper limit, the volumetric efficiency of the gear pump on the most downstream side is more preferably 98.0% or less.

An absolute value of a difference between the volumetric efficiency of the gear pump 14 that is the gear pump on the most downstream side and the volumetric efficiency of the gear pump(s) other than the gear pump on the most downstream side is preferably 2.0% or more, and more preferably 2.5% or more. For example, when the pressure of the fluidized resin tends to increase in the serial pipe 13a between the gear pumps 13, 14, an absolute value of a difference between the volumetric efficiency of the gear pump 14 and the volumetric efficiency of the gear pump 13 is 2.0% or more, so that a backflow to the gear pump 13 side having low volumetric efficiency is likely to occur, and pressure fluctuation in a system can be absorbed. Therefore, good metering accuracy and stable discharge can be achieved.

The absolute value of the difference between the volumetric efficiency is preferably 50.0% or less, and more preferably 45.0% or less.

In the embodiment of the present invention, the differential pressure between a plurality of gear pumps is required to be 7.0 MPa or less. The differential pressure between the plurality of gear pumps is preferably 6.0 MPa. The differential pressure between the plurality of gear pumps refers to an absolute value of a difference between a pressure measured at an outlet side of a gear pump on an upstream side and a pressure measured at an inlet side of a gear pump on a downstream side. For example, in the configuration shown in FIG. 1, the differential pressure between the plurality of gear pumps is an absolute value of a difference between a value of the pressure sensor 16-1 on the outlet side of the gear pump 13 and a value of the pressure sensor 16-2 on the inlet side of the gear pump 14. When the differential pressure between the gear pumps is 7.0 MPa or less, the flow can be maintained when a backflow occurs. Therefore, the pressure fluctuation can be prevented, and the control using a backflow is enabled. On the other hand, when the differential pressure between the gear pumps exceeds 7.0 MPa because the length of the serial pipe 13a is long or a filter having high filtration accuracy is provided, such a state is a state where the resistance to the flow of the polymer is high. As a result, even if the backflow occurs, the polymer is less likely to flow through a short pipe, and it is difficult to control the pressure fluctuation by the backflow.

In the embodiment of the present invention, the fluidized resin may be a polyolefin solution obtained by melt-kneading a polyolefin resin and a plasticizer by an extruder.

In the method for producing a polyolefin microporous membrane in the embodiment of the present invention, stretching and removal of the plasticizer are performed after a sheet is molded by the above method for producing a sheet, so that the polyolefin microporous membrane is produced.

In the present invention, polyethylene, polypropylene, polystyrene, polymethylpentene, or the like can be used as the polyolefin resin.

The plasticizer determines a structure for the micropore formation in a polyolefin microporous membrane, and contributes to improvement in stretchability (for example, reduction of spots at a stretching magnification for strength expression) when a film is stretched. The plasticizer is not particularly limited as long as it is a substance that can be mixed with or dissolved in a polyolefin resin.

Examples of a plasticizer that is a solid at room temperature include stearyl alcohols, ceryl alcohols, paraffin waxes, and the like. In order to prevent the occurrence of the spots during stretching, the plasticizer is preferably a liquid at room temperature in consideration of later application.

Examples of a liquid plasticizer include aliphatic hydrocarbons, cyclic aliphatic hydrocarbons or aromatic hydrocarbons, such as nonane, decane, decalin, paraxylene, undecane, dodecane, and liquid paraffin, mineral oil fractions whose boiling point is within a boiling point range of these compounds, and phthalic esters that are liquid at room temperature, such as dibutyl phthalate and dioctyl phthalate. In order to obtain a gel-like sheet containing a liquid plasticizer whose content is stable, it is more preferable to use liquid paraffin. For example, the viscosity of the liquid plasticizer is preferably 20 cSt to 200 cSt at 40°C. The plasticizer is mixed with the polyolefin resin under a melt-kneading state, and a solvent which is solid at room temperature may be mixed with the plasticizer.

Regarding a blending ratio between the polyolefin resin and the plasticizer, when the total of the polyolefin resin and the plasticizer is 100 mass%, a content of the polyolefin resin is preferably 10 mass% to 50 mass% from the viewpoint of improving the moldability of extruded products.

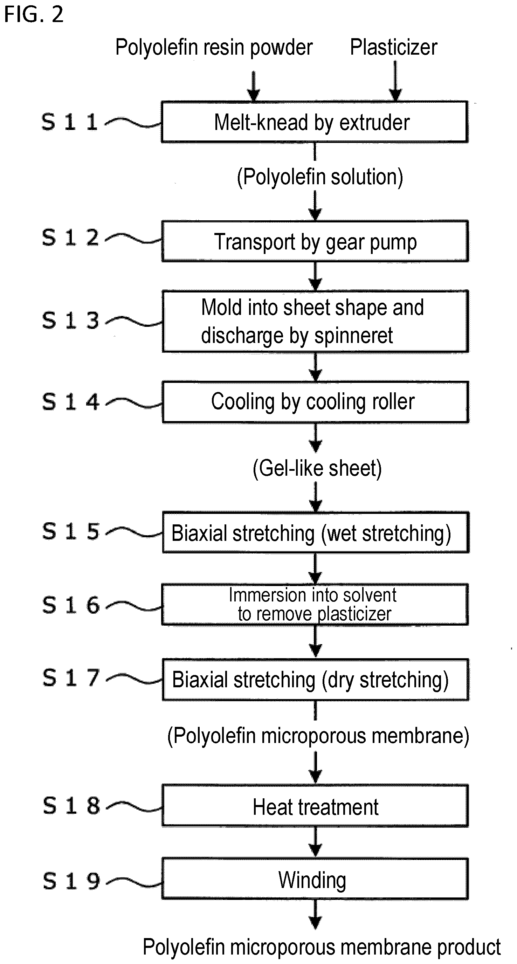

FIG. 2 shows the overall steps for obtaining a polyolefin microporous membrane product. First, a polyolefin resin powder is supplied from the hopper 12 to the extruder 11, and a plasticizer is added to the extruder 11 from the plasticizer inlet 11a, and melt-kneading thereof is performed (S11). Accordingly, a polyolefin solution having the above-mentioned MI is prepared. The prepared polyolefin solution is transported while being metered by the gear pumps 13, 14 as described above (S12), and is molded into a sheet shape and discharged by the spinneret 21 (S13). The discharged sheet-shaped polyolefin solution is cooled by the cooling roller 30 to form a gel-like sheet (S14). Next, wet biaxial stretching is performed on the gel-like sheet (S15), and the biaxially stretched gel-like sheet is immersed in a solvent (S16). Since the plasticizer is removed by the solvent, a polyolefin microporous membrane is formed. Next, dry biaxial stretching is performed on the formed polyolefin microporous membrane (S17), heat relaxation and cooling are performed (S18), then the polyolefin microporous membrane is wound up (S19), and a roll around which a polyolefin microporous membrane product is wound can be obtained. Since the steps from the melt-kneading to the winding can be carried out continuously, the polyolefin microporous membrane is obtained as a web film or an elongated film.

As described above, the gear pump 13 on the upstream side is allowed to have functions of the boosting in the serial pipe 13a and rough metering, so that the gear pump 14 on the most downstream side can be allowed to focus on discharging of the polyolefin solution with high accuracy. In a preferred embodiment of the present invention, a resin having MI extremely suitable for the operation of the gear pumps 13, 14 is used, so that the polyolefin solution can be discharged with high accuracy while preventing thermal deterioration of the resin, and a microporous membrane excellent in uniformity of the film thickness can be obtained as described above.

Since the configuration and the volumetric efficiency of the gear pumps 13, 14 are adjusted as described above, the rotation speed of the gear pump 14 on the most downstream side can be set to be constant. Therefore, as compared with a case where the polyolefin solution is discharged while adjusting the rotation speed of the gear pump 14, the discharge accuracy of the polyolefin solution is extremely high since the control of the gear pump 14 is not required.

In the preferred embodiment of the present invention, only the serial pipe 13a is disposed between the gear pumps 13, 14, and the pressure of the polyolefin solution in the serial pipe 13a does not disperse to other members (for example, branch pipes). Therefore, the pressure just before the gear pump 14 can be kept constant. Since the gear pumps 13, 14 are arranged continuously (without arranging other member(s) between the gear pumps 13, 14), heat input to the polyolefin solution can be minimized.

As the extruder 11 described above, a twin-screw extruder or a single-screw extruder is preferably used, or these twin-screw extruder and single-screw extruder may be arranged in series with each other. Alternatively, a twin-screw extruder may be used as the extruder 11, and a single-screw extruder may be provided between the gear pump 14 on the most downstream side, of the plurality of gear pumps 13, 14, and the spinneret 21.

### Examples

Hereinafter, the present invention is described in more detail with reference to Examples and the like. The present invention is not limited to these examples.

### Measurement method and evaluation method

### [Viscosity based on melt index measurement method (MI)]

MI (unit: g/10 min) was measured at the condition M (230°C, 2.16 kgf (21.18 N)) in accordance with JIS K 7210 (1999).

MI was evaluated for the following items.

Spinneret discharge Average value of MI (unit: g/10 min)

In the configuration shown in FIG. 1, a polyolefin solution discharged from the spinneret 21 after the melt-kneading was performed by the extruder 11, the MI measurement was carried out, and an average value thereof was determined.

### [Spinneret discharge fluctuation 3σ value]

The polyolefin solution discharged from the spinneret 21 was metered 10 times every 36 seconds, and a value obtained by dividing a 3σ value of metering values of 10 times by an average value of the metering values of 10 times was defined as a fluctuation 3σ value (unit: %).

### [Volumetric efficiency of gear pump]

A theoretical discharge amount was calculated from a value of the rotation speed of each of gear pumps 13, 14 and a volume per rotation speed of the gear pump. In addition, the polyolefin solution discharged from the spinneret 21 was metered 10 times every 36 seconds, and an average value of the metering values of 10 times was defined as an actual discharge amount. A value obtained by dividing the actual discharge amount by the theoretical discharge amount was defined as the volumetric efficiency (unit: %).

### [Thickness unevenness]

A polyolefin microporous membrane was produced by the steps shown in FIG. 2, a thickness of the microporous membrane was measured over time by a β-ray thickness meter, and a value, which was obtained by dividing a R value (maximum value - minimum value) of thickness data per minute for five hours of a part corresponding to a central part of the polyolefin microporous membrane by an average value of thickness data per minute for five hours of a central part of the film, was defined as the film thickness unevenness (unit: %).

### [Puncture strength]

A maximum load, which was measured when a polyolefin microporous membrane produced by the steps shown in FIG. 2 and cut in a size of 95 mm × 95 mm was punched at a speed of 2 mm/sec by using a needle with a diameter of 1 mm having a spherical tip surface (curvature radius R: 0.5 mm), was defined as the puncture strength (unit: gf).

### [Examples 1 to 10 and Comparative Examples 1 and 2, and 4 and 5]

Using the configuration shown in FIG. 1, a polyolefin resin, a liquid paraffin as a plasticizer, and tetrakis[methylene-3-(3,5-ditertiary butyl-4-hydroxyphenyl)-propionate] methane (0.3 parts by mass per 100 parts by mass of polyolefin resin) as an antioxidant were melt-kneaded by the extruder 11 based on the composition and the condition shown in Table 1 or Table 2, and a polyolefin solution was prepared. A twin-screw extruder was used as the extruder 11. The polyolefin solution discharged from the extruder 11 was transported by two gear pumps, i.e., the gear pump 13 (upstream side) and the gear pump 14 (the most downstream side) that were connected to each other in series, supplied to a T-die that is the spinneret 21, and extruded. The control unit 17 for controlling the gear pump 13 on the upstream side was not used. The extruded body was cooled while winding it by a cooling roller 30 to form a gel-like sheet. Then, the gel-like sheet was biaxially stretched (wet stretched) at five times in both the MD direction and TD direction at a temperature of 110°C by a tenter stretching machine.

The stretched gel-like sheet was immersed in a methylene chloride bath to remove the liquid paraffin that is a plasticizer, and a washed polyolefin microporous membrane was obtained. The obtained polyolefin microporous membrane was dry-stretched in the MD direction and the TD direction by a tenter stretching machine at 126°C based on the dry stretching ratio described in Table 1 or Table 2. Next, the membrane was subjected to a heat relaxation treatment in a tenter stretching machine as it was while the membrane was shrunk by 8% at a temperature of 126°C. The polyolefin microporous membrane was then cooled to room temperature and wound by a winder. A β-ray thickness meter was set in a path for transporting the cooled polyolefin microporous membrane to the winder, and the thickness measurement was performed.

The pressure between the gear pumps was adjusted by changing the length and diameter of the short pipe between the gear pumps. The volumetric efficiency of each of the gear pumps was adjusted by adjusting a structure of the gear pump when the volumetric efficiency was changed greatly, and was adjusted by changing the temperature setting of the gear pump when a difference of about 2% occurred. The evaluation results of the obtained polyolefin microporous membrane were also shown in Table 1 or Table 2.

In Table 1 or Table 2, UHMWPE represents an ultra-high molecular weight polyethylene having a weight average molecular weight (Mw) of 2.0 × 10⁶, and HDPE represents a high-density polyethylene having a Mw of 6.0 × 10⁵. PP represents polypropylene having a Mw of 1.6 × 10⁶. The concentration (mass%) of a resin in a melt-kneaded product (resin composition) represents a content of the polyolefin resin relative to the total of the polyolefin resin and the plasticizer.

### [Comparative Example 3]

A polyolefin microporous membrane was attempted to be obtained in the same manner as those of Examples 1 to 10 and Comparative Examples 1 and 2, and 4 and 5 except that volumetric efficiency of the gear pumps 13, 14 was set as the value described in Table 2. However, the pressure fluctuations in the gear pumps 13, 14 increased and a polyolefin microporous membrane could not be produced.

### [Comparative Example 6]

A polyolefin microporous membrane was obtained in the same manner as those of Examples 1 to 10 and Comparative Examples 1 and 2, and 4 and 5 except that volumetric efficiency of the gear pumps 13, 14 was set as the value described in Table 2, and a filter was set in the middle of the serial pipe 13a between the gear pumps 13, 14. The evaluation results of the obtained polyolefin microporous membrane were shown in Table 2.

**Table 1**

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Composition of resin | UHMWPE | Content (mass%) | 30 | 20 | 0 | 20 | 20 | 0 | 30 | 30 | 30 | 30 |
| | HDPE | Content (mass%) | 70 | 80 | 80 | 80 | 80 | 50 | 70 | 70 | 70 | 70 |
| | PP | Content (mass%) | 0 | 0 | 20 | 0 | 0 | 50 | 0 | 0 | 0 | 0 |
| | Concentration (mass%) of resin in melt-kneaded product (resin composition) | | 30 | 25 | 25 | 25 | 25 | 30 | 30 | 30 | 30 | 30 |
| Spinneret discharge Average value of MI (g/10 min) | | | 1.98 | 18.3 | 42.1 | 12.2 | 16.3 | 16.5 | 1.95 | 1.93 | 1.97 | 1.92 |
| Spinneret discharge fluctuation 3σ value (%) | | | 1.19 | 1.15 | 1.14 | 1.12 | 1.56 | 1.55 | 1.98 | 1.78 | 2.00 | 1.51 |
| Volumetric efficiency (%) of gear pump 13 (upstream side) | | | 75.9 | 62.9 | 70.8 | 89.7 | 89.5 | 85.0 | 72.9 | 74.0 | 76.0 | 65.1 |
| Volumetric efficiency (%) of gear pump 14 (most downstream side) | | | 96.4 | 95.3 | 97.3 | 96.1 | 92.1 | 90.4 | 96.1 | 95.6 | 95.2 | 95.8 |
| Stretching magnification | Wet stretching | Magnification (MD) | 5.0 | 5.0 | 5.0 | 5.0 | 5.0 | 5.0 | 5.0 | 5.0 | 5.0 | 5.0 |
| | | Magnification (TD) | 5.0 | 5.0 | 5.0 | 5.0 | 5.0 | 5.0 | 5.0 | 5.0 | 5.0 | 5.0 |
| | Dry stretching | Magnification (MD) | 1.0 | 1.0 | 1.0 | 1.0 | 1.0 | 1.0 | 1.0 | 1.0 | 1.0 | 1.0 |
| | | Magnification (TD) | 1.5 | 1.5 | 1.5 | 1.5 | 1.5 | 1.5 | 1.5 | 1.5 | 1.5 | 1.5 |
| Differential pressure (MPa) between gear pumps | | | 5.4 | 2.7 | 1.3 | 2.2 | 3.0 | 2.8 | 6.2 | 5.9 | 7.0 | 5.8 |
| Thickness unevenness (%) | | | 3.2 | 3.1 | 3.1 | 3.0 | 4.2 | 4.0 | 5.0 | 4.5 | 5.0 | 4.0 |
| Puncture strength (gf) | | | 445 | 241 | 162 | 269 | 252 | 284 | 447 | 448 | 242 | 445 |

**Table 2**

| | | | Comparative Examples | | | | | |
|---|---|---|---|---|---|---|---|---|
| | | | 1 | 2 | 3 | 4 | 5 | 6 |
| Composition of resin | UHMWPE | Content (mass%) | 20 | 20 | 20 | 30 | 30 | 30 |
| | HDPE | Content (mass%) | 80 | 80 | 80 | 70 | 70 | 70 |
| | PP | Content (mass%) | 0 | 0 | 0 | 0 | 0 | 0 |
| | Concentration (mass%) of resin in melt-kneaded product (resin composition) | | 25 | 25 | 25 | 30 | 30 | 25 |
| Spinneret discharge Average value of MI (g/10 min) | | | 18.6 | 18.9 | 18.1 | 1.91 | 1.95 | 2.38 |
| Spinneret discharge fluctuation 3σ value (%) | | | 2.20 | 3.06 | - | 2.19 | 3.02 | 4.88 |
| Volumetric efficiency (%) of gear pump 13 (upstream side) | | | 49.7 | 67.9 | 95.8 | 78.2 | 85.5 | 88.0 |
| Volumetric efficiency (%) of gear pump 14 (most downstream side) | | | 95.0 | 89.0 | 98.2 | 96.1 | 95.5 | 92.6 |
| Stretching magnification | Wet stretching | Magnification (MD) | 5.0 | 5.0 | - | 5.0 | 5.0 | 5.0 |
| | | Magnification (TD) | 5.0 | 5.0 | - | 5.0 | 5.0 | 5.0 |
| | Dry stretching | Magnification (MD) | 1.0 | 1.0 | - | 1.0 | 1.0 | 1.0 |
| | | Magnification (TD) | 1.5 | 1.5 | - | 1.5 | 1.5 | 1.5 |
| Differential pressure (MPa) between gear pumps | | | 2.6 | 2.7 | - | 7.3 | 8.0 | 15.2 |
| Thickness unevenness (%) | | | 5.3 | 8.1 | - | 5.4 | 8.2 | 10.2 |
| Puncture strength (gf) | | | 240 | 242 | - | 448 | 450 | 452 |

It is found from Table 1 and Table 2 that when the spinneret discharge fluctuation 3σ value is 2% or less, the thickness unevenness in a final polyolefin microporous membrane is 5% or less and a good polyolefin microporous membrane could be obtained. It is found that when the spinneret discharge fluctuation 3σ value is 1.8% or less, the thickness unevenness in a final polyolefin microporous membrane is 4.5% or less, and an even better polyolefin microporous membrane could be obtained. It was found that the spinneret discharge fluctuation 3σ value was 2% or less when the volumetric efficiency of the gear pump 13 on the upstream side was 50.0% or more and less than 90.0%, the volumetric efficiency of the gear pump 14 on the most downstream side was 90% or more, and the differential pressure between the plurality of gear pumps was 7.0 MPa or less. It was found that the spinneret discharge fluctuation 3σ value was 1.8% or less when the volumetric efficiency of the gear pumps 13, 14 was within the above range, and the differential pressure between the plurality of gear pumps was 6.0 MPa or less.

### INDUSTRIAL APPLICABILITY

The present invention is suitable as a method for producing a microporous membrane excellent in uniformity of the film thickness and having excellent puncture strength since the rotation speed of a plurality of gear pumps is adjusted. Therefore, the present invention is suitable for a case where a polyolefin-based raw material having a specific MI is used.

### REFERENCE SIGNS LIST

- 10: Kneading metering apparatus
- 11: Extruder
- 11a: Plasticizer inlet
- 12: Hopper
- 13, 14: Gear pump
- 13a: Serial pipe
- 15, 16-1, 16-2: Pressure sensor
- 17: Control unit
- 18: Strainer (filter)
- 20: Discharge apparatus
- 21: Spinneret (die)
- 30: Cooling roller
- 31: Discharged fluidized resin

## Claims

1. A method for producing a sheet, the method comprising:
transporting a fluidized resin (31) by a plurality of gear pumps connected to each other in series;
molding the transported fluidized resin (31) into a sheet shape by a spinneret (21),
**characterized in that** among the plurality of gear pumps, a gear pump on the most downstream side (14) is operated such that a volumetric efficiency thereof is 90.0% or more, and
a gear pump other than the gear pump on the most downstream side is operated such that a volumetric efficiency thereof is 50.0% or more and less than 90.0%, and
the plurality of gear pumps is operated such that a differential pressure between the plurality of gear pumps is 7.0 MPa or less;
wherein the differential pressure between the plurality of gear pumps is an absolute value of a difference between a pressure measured at an outlet side of a gear pump on an upstream side (13) and a pressure measured at an inlet side of a gear pump on a downstream side (14) which is adjacent to the gear pump on an upstream side (13).

2. The method for producing a sheet according to claim 1, wherein the differential pressure between the plurality of gear pumps is 6.0 MPa or less.

3. The method for producing a sheet according to claim 1 or 2, wherein among the plurality of gear pumps, the gear pump on the most downstream side (14) is operated such that the volumetric efficiency is 99.0% or less.

4. The method for producing a sheet according to any one of claims 1 to 3, wherein the fluidized resin (31) is a polyolefin solution obtained by melt-kneading a polyolefin resin and a plasticizer by an extruder (11).

5. A method for producing a polyolefin microporous membrane, the method comprising molding a sheet by the method for producing a sheet according to claim 4, and then stretching the sheet and removing the plasticizer to produce a polyolefin microporous membrane.

6. The method for producing a polyolefin microporous membrane according to claim 5, wherein the polyolefin solution has a viscosity based on a melt index measurement method (MI) of 1 g/10 min or more and 150 g/10 min or less.

## Patentansprüche

1. Verfahren zur Herstellung einer Folie, wobei das Verfahren Folgendes umfasst:
Transportieren eines fluidisierten Harzes (31) durch eine Vielzahl von Zahnradpumpen, die in Reihe miteinander verbunden sind;
Formen des transportierten fluidisierten Harzes (31) durch eine Spinndüse (21) zu einer Folienform,
**dadurch gekennzeichnet, dass** aus der Vielzahl von Zahnradpumpen eine Zahnradpumpe auf der äußersten Stromab-Seite (14) so betrieben wird, dass eine volumetrische Effizienz davon 90,0 % oder mehr beträgt, und
eine Zahnradpumpe, die nicht die Zahnradpumpe auf der äußersten Stromab-Seite ist, so betrieben wird, dass eine volumetrische Effizienz davon 50,0 % oder mehr und weniger als 90,0 % beträgt, und
die Vielzahl von Zahnradpumpen so betrieben wird, dass ein Differentialdruck zwischen der Vielzahl der Zahnradpumpen 7,0 MPa oder weniger beträgt;
wobei der Differentialdruck zwischen der Vielzahl von Zahnradpumpen ein Absolutwert einer Differenz zwischen einem an einer Auslassseite einer Zahnradpumpe auf einer Stromauf-Seite (13) gemessenen Druck und einem an einer Einlassseite einer Zahnradpumpe auf einer Stromab-Seite (14), die benachbart zu der Zahnradpumpe auf einer Stromauf-Seite (13) ist, gemessenen Druck ist.

2. Verfahren zur Herstellung einer Folie nach Anspruch 1, wobei der Differentialdruck zwischen der Vielzahl von Zahnradpumpen 6,0 MPa oder weniger beträgt.

3. Verfahren zur Herstellung einer Folie nach Anspruch 1 oder 2, wobei aus der Vielzahl von Zahnradpumpen die Zahnradpumpe auf der äußersten Stromab-Seite (14) so betrieben wird, dass die volumetrische Effizienz 99,0 % oder weniger beträgt.

4. Verfahren zur Herstellung einer Folie nach einem der Ansprüche 1 bis 3, wobei das fluidisierte Harz (31) eine Polyolefinlösung ist, die durch Schmelzkneten eines Polyolefinharzes und eines Weichmachers durch einen Extruder (11) erhalten wird.

5. Verfahren zur Herstellung einer mikroporösen Polyolefinmembran, wobei das Verfahren das Formen einer Folie durch ein Verfahren zur Herstellung einer Folie nach Anspruch 4 und dann Strecken der Folie und Entfernen des Weichmachers umfasst, um eine mikroporöse Polyolefinmembran zu erzeugen.

6. Verfahren zur Herstellung einer mikroporösen Polyolefinmembran nach Anspruch 5, wobei die Polyolefinlösung eine Viskosität, basierend auf einem Schmelzindex-Messverfahren (MI), von 1 g/10 min oder mehr und 150 g/10 min oder weniger aufweist.

## Revendications

1. Procédé de fabrication d'une feuille, le procédé comprenant les étapes consistant à :
transporter une résine fluidisée (31) par une pluralité de pompes à engrenages reliées les unes aux autres en série ;
mouler la résine fluidisée transportée (31) en une forme de feuille par une filière (21),
**caractérisé en ce que** parmi la pluralité de pompes à engrenages, une pompe à engrenages sur le côté le plus en aval (14) est actionnée de telle sorte que son efficacité volumétrique soit supérieure ou égale à 90,0 %, et
une pompe à engrenages autre que la pompe à engrenages du côté le plus en aval est actionnée de telle sorte que son efficacité volumétrique soit supérieure ou égale à 50,0 % et inférieure à 90,0 %, et
la pluralité de pompes à engrenages est actionnée de telle sorte qu'une pression différentielle entre la pluralité de pompes à engrenages soit inférieure ou égale à 7,0 MPa ;
dans lequel la pression différentielle entre la pluralité de pompes à engrenages est une valeur absolue d'une différence entre une pression mesurée au niveau d'un côté de sortie d'une pompe à engrenages sur un côté amont (13) et une pression mesurée au niveau d'un côté d'entrée d'une pompe à engrenages sur un côté aval (14) qui est adjacent à la pompe à engrenages sur un côté amont (13).

2. Procédé de fabrication d'une feuille selon la revendication 1, dans lequel la pression différentielle entre la pluralité de pompes à engrenages est inférieure ou égale à 6,0 MPa.

3. Procédé de fabrication d'une feuille selon la revendication 1 ou 2, dans lequel parmi la pluralité de pompes à engrenages, la pompe à engrenages sur le côté le plus en aval (14) est actionnée de telle sorte que l'efficacité volumétrique soit inférieure ou égale à 99,0 %.

4. Procédé de fabrication d'une feuille selon l'une quelconque des revendications 1 à 3, dans lequel la résine fluidisée (31) est une solution de polyoléfine obtenue par malaxage à l'état fondu d'une résine de polyoléfine et d'un plastifiant par une extrudeuse (11).

5. Procédé de fabrication d'une membrane microporeuse de polyoléfine, le procédé comprenant les étapes consistant à mouler une feuille par le procédé de fabrication d'une feuille selon la revendication 4, puis à étirer la feuille et à retirer le plastifiant pour produire une membrane microporeuse de polyoléfine.

6. Procédé de production d'une membrane microporeuse de polyoléfine selon la revendication 5, dans lequel la solution de polyoléfine présente une viscosité basée sur un procédé de mesure d'indice de fusion (MI) supérieur ou égal à 1 g/10 min et inférieur ou égal à 150 g/10 min.
